# EUROPEAN PATENT APPLICATION

(11) **EP 4 741 662 A2**
(43) Date of publication of application: **13.05.2026**
(21) Application number: 26166474.2
(22) Date of filing: 28.10.2020
(51) Int. Cl.: F04D 9/06

(54) **SYSTEMS AND METHODS FOR USE IN OPERATION OF A FIREFIGHTING VEHICLE**

(30) Priority: 28.10.2019 US 201962926755 P; 19.06.2020 US 202063041448 P; 17.08.2020 US 202016995264
(62) Divisional of application: 20880719.8
(71) Applicant: Hale Products, Inc., Ocala, FL 34475 (US)
(72) Inventor: Brown, William J., The Villages, FL, 32163 (US); Clementson, George H. M. III, Summerfield, FL, 34491 (US); Laskaris, Michael A., Collegeville, PA, 19426 (US); Miller, David Lamont, Lafayette Hill, PA, 19444 (US); Cerrano, Jason, Wentzville, MO, 63385 (US)
(74) Representative: Petraz, Gilberto Luigi

(57) **Abstract**

Systems and methods implemented as part of firefighting operations include a dual priming system having a positive displacement pump and a venturi, each of which may be active depending on the mode in which the system is operational, a BLDC motor operable in two modes depending on the rotational speed and required torque, a fire suppression system operating a bypass valve upon detecting a loss of prime from an off-board additive container, a valve checker system that rotates a valve element without opening the valve to prevent stiction and detect errors, a chemical additive system for a firefighting vehicle configured to perform an air purge after a flushing operation, and a system that uses a bypass valve and an off-board container for dispersing a decontamination solution.

## Description

### BACKGROUND

Embodiments described in this application below relate generally to firefighting vehicles, and more particularly, to various aspects of systems and methods that may be implemented as part of firefighting operations managed by the vehicle, including flow control systems involving pumps, tanks, intakes, discharges, and the like.

In one aspect, embodiments described herein are generally directed to pump priming, and, more particularly, to a dual priming system for a centrifugal pump.

Centrifugal pumps are pumps that convert rotational energy, e.g., from a motor of the pump, into kinetic energy in the form of a moving fluid. Traditional centrifugal pumps require the pump casing to be evacuated of gas and filled with liquid before the pump is operated in order to function properly. Accordingly, centrifugal pumps require priming systems to supply fluid into the centrifugal pump casing prior to operation thereof.

Generally, centrifugal pumps are primed via a positive displacement pump, such as, for example, an electrically operated positive displacement vacuum pump. In emergency services applications, such as priming a pump on a fire truck, the positive displacement pump is powered by the truck's electrical system. As should be understood, time is of the essence in emergency services applications and a delay in water delivery can be catastrophic. Accordingly, one drawback of such a priming setup is that the power of the positive displacement pump, and, in turn, the priming efficiency of the pump, is limited by the maximum power that can be obtained from the truck's electrical system. Another drawback of such a priming setup is that it is generally loud in operation, rendering verbal communication increasingly challenging, even in light duty priming operations.

Accordingly, it would be advantageous to manufacture a priming system capable of producing greater priming power resulting in faster priming. It would be further advantageous to manufacture a priming system capable of operating in a low noise setting during light duty priming operations.

In another aspect, embodiments described herein relate to a device and method for checking the operability of fire truck valves, and more particularly, to a fire truck valve checker and a method of using the fire truck valve checker to validate the operability of one or more fire truck valves.

Valves of various types experience sticking that makes them hard to operate when they have been sitting for a while without operating. This is particularly an issue in fire apparatus pumps and valves where individual valves may not be used for a considerable period of time between use. This is characteristic of power operated ball valves and butterfly valves used in a pumper type fire apparatus where the valves sit for long periods of time in between use.

Pumper truck valves typically have a softer sealing element that can stick to a harder valve element. Different materials are used to minimize this phenomenon; nonetheless valves can still stick and not operate when needed. Should this be the case of a power operated valve, the stuck valve might trip a breaker or stall a motor. Stuck manually operated valves can be so difficult to operate that the valve fails to open under pressure. The longer a valve sits without being used, the more the materials tend to stick to each other, sometimes through 'plastic creep' of the two adjacent materials. The materials can flow into the pores of the mating part, binding them together. Lubrication is used to prevent sticking, but lubrication is difficult to achieve in a mobile fire apparatus that has limitations on size and weight. Even with lubrication, sticking or seizing can occur when a valve is not moved over longer periods of time. In the case of rubber seated valves, the rubber appears to vulcanize to the mating part.

Additionally, the valve mechanical actuator and/or its electrical connections (whether they be via a J1939 CAN network or individual hardwired connection, for example) are subject to wear and damage like any other component. So, a mechanical or electrical issue can contribute to a stuck valve. For instance, a weak ground connection that has been subject to corrosion from road salt or other means may reduce the effective power available to the motor, which decreases the motor output torque and makes it more likely that the valve will be unable to move when needed after sitting a long time. Similar risks apply to all the mechanical interconnects, couplings, gears and electrical interconnects, switches, wires, and the like.

Furthermore, the vast majority of fire departments in North America are volunteer based, meaning an operator is not necessarily at the vehicle every day, and the number of fire events per year is decreasing over time, based on readily available reporting, which yields an assessment that valves can remain untested and possibly stuck or otherwise not function over time and a stuck condition may not be detected until the fire department operator needs to use them in an emergency situation.

Accordingly, there is a need to assure the operability of pumper truck valves when needed after a long idle period.

In yet another aspect, embodiments described herein relate generally to control of a motor, and more particularly, control of a brushless direct-current (DC) motor that is operated at low speeds but which nonetheless supplies sufficient torque for the intended application. Such motor control is particularly suitable for injection of fire suppression additives (e.g., foam) into a water stream at low pressure. Further embodiments described herein relate generally to systems for injecting fire suppression additives, and more particularly, to systems that can easily and effectively add fire suppression foam from either on-board tanks or off-board containers.

Brushless DC or electronically-commutated motors are commonly used in many applications, including in foam proportioners, often found on firefighting vehicles, where a fire suppression foam is injected into a water stream to aid in extinguishing a fire. Foam injection is a method typically utilized when water resources are difficult to reach or are limited. In such circumstances, additives such as Class A foam can be used and are often proportioned at low rates, such as 0.1-0.3%. Reduced water availability can also lead to reduced or low flow rate nozzles, where actual water or agent flow rate can be as low as 6-15 gallons per minute. The foam injection pump or proportioner therefore should be capable of injecting at the lowest percentage at the lowest flows, and at the other extreme, at the highest percentage at highest flow rates. When the water stream is at high pressure, a brushless DC motor is ideal for operating a pump to inject the fire suppression foam. However, in such applications, the motor is typically operating at high speed. As the speed of the motor decreases, the motor operates at reduced torque. At lower water flow rates, the motor must turn very slowly, sometimes even at single digit revolutions per minute (RPMs). Traditional brushless DC motors have insufficient torque at such speeds to operate the foam pump.

To overcome these issues, other types of systems have previously been used. For example, hydrostatic drives can be used to operate the foam pump at low speeds, but such systems are physically large, heavy, and complex, making them difficult to implement on different types of firefighting vehicles. Stepper motors are capable of operating a pump at low speeds but cannot operate at high enough speeds for high flow applications. Some systems have utilized a two pump/motor arrangement, where one pump and motor are utilized for low speed applications and a second pump and motor are utilized for higher speeds. Although smaller than the hydrostatic drives, dual pumps and motors still occupy a larger space than a single motor system and are more complex.

A further issue arises during extended operation, which can drain the on-board chemical additive storage tank(s). Additive(s) can then be drawn from external, off-board containers, for example, a five gallon pail, a fifty-five gallon drum, a tote tank containing hundreds of gallons, or the like. Such external containers may also be used when specific hazards occur that require different additives. Priming of the pump therefore becomes important when switching among external containers. "Foaming" type chemical additives are more difficult to prime into the pump because compressible bubbles can easily form and "air bind" the pump as it tries to pull the additive from the container. A venting mechanism, operated by a bypass valve, is typically provided to allow air to escape between the pump and the injection point with the water stream.

It is desired to provide a single motor with a high turn-down ratio that can be reliably operated anywhere from about 1 RPM to thousands of RPMs with enough torque to meet the needs of the desired application at any speed, in particular fire suppression foam injection. It is further desired to provide a fire suppression additive system that allows for easy and effective use of firefighting additives, such as foams, from either on-board tanks or off-board containers.

In still another aspect, embodiments described herein relate to flushing/draining operations of a firefighting chemical additive system. Such systems, such as foam injection systems, require flushing and/or draining operations to be performed in order to eject residual chemical additives remaining in the piping/tubing of the system after a task is completed, e.g., when switching to a new additive or when shutting the system down. Flushing involves obtaining water from a pressurized source, such as via a water pump, and sending the water through the main additive pump line to wash out residual additives. However, in cold weather, such systems have difficulty draining and are susceptible to freezing. It is therefore desirable to provide a flushing/draining operation that allows the system to properly drain and avoid freezing in cold environments.

In yet another aspect, embodiments described herein relate to firefighter decontamination. In the fire industry, firefighters are at an increased risk of cancer due to exposure of carcinogenic materials used in modern construction. The utilization of decontamination procedures after fireground operations have been shown to dramatically decrease the length of exposure and potential absorption by the firefighters. Although long term studies have not yet been conducted on the results of post operations decontamination, there is a movement to implement these procedures due to the implicit correlation between length of exposure and absorption.

The current decontamination method utilizes a hydrant that runs through the water pump and a side discharge. The National Fire Protection Association (NFPA) dictates that the water source must be fresh and not from a tank. The pressure works best at 40 psi or greater. Therefore, a hydrant is used in most scenarios, but when a hydrant is unavailable this is not possible. A bucket and a brush are also required for the current decontamination method. It is therefore desirable to provide a decontamination method that is safer, more hygienic, and more readily available.

### BRIEF SUMMARY

Briefly stated, one embodiment comprises a pump system including a centrifugal pump defining a casing with an inlet, an outlet and a vacuum port. The inlet is fluidly connectable with a liquid containing reservoir. A dual priming system is connected with the vacuum port of the centrifugal pump and is configured to evacuate gas from the centrifugal pump casing and draw liquid from the reservoir into the centrifugal pump casing. The dual priming system includes a compressed air source and a positive displacement pump having an inlet port and a discharge port. The inlet port is fluidly connected with the vacuum port of the centrifugal pump. A venturi has an inlet port, an outlet port and a suction port. The inlet port is fluidly connectable with the compressed air source and the suction port is fluidly connectable with the vacuum port of the centrifugal pump in parallel with the inlet port of the positive displacement pump. A check valve is positioned upstream and in line with the suction port of the venturi and is positioned in parallel with the inlet port of the positive displacement pump. The check valve is oriented in a closed position, substantially preventing fluid flow from the vacuum port of the centrifugal pump to the suction port of the venturi, and is actuatable to an open position, permitting fluid flow from the vacuum port of the centrifugal pump to the suction port of the venturi. A control valve is positioned upstream and in-line with the venturi inlet port. The control valve has an inlet fluidly connected with the compressed air source and an outlet fluidly connected with the venturi inlet port. The control valve is actuatable between a closed position, substantially fluidly disconnecting the compressed air source from the venturi, and an open position, fluidly connecting the compressed air source with the venturi inlet port. The dual priming system is operational in a first mode, wherein the positive displacement pump is inactive and the venturi is activated, and a second mode, wherein the positive displacement pump is activated and the venturi is activated.

In one aspect, the dual priming system is further operational in a third mode wherein the positive displacement pump is activated and the venturi is inactive.

In another aspect, orientation of the control valve into the open position thereof is configured to permit compressed air to flow into the inlet port of the venturi, thereby creating a vacuum at the suction port, and, in turn actuating the check valve into the open position thereof.

In another aspect, the pump system further includes a power source connectable to the positive displacement pump for activation thereof. In another aspect, the power source is a vehicle battery.

In another aspect, the compressed air source is part of an automotive air brake system.

In another aspect, the positive displacement pump is an electric rotary vane-type positive displacement pump.

Another embodiment comprises a pump system including a centrifugal pump defining a casing with an inlet, an outlet and a vacuum port. The inlet is fluidly connectable with a liquid containing reservoir. A dual priming system is connected with the vacuum port of the centrifugal pump and is configured to evacuate gas from the centrifugal pump casing and draw liquid from the reservoir into the centrifugal pump casing. The dual priming system includes a compressed air source and a positive displacement pump having an inlet port and a discharge port. The inlet port is fluidly connectable with the vacuum port of the centrifugal pump. A venturi has an inlet port, an outlet port and a suction port. The inlet port is fluidly connectable with the compressed air source and the suction port is fluidly connectable with the vacuum port of the centrifugal pump in parallel with the inlet port of the positive displacement pump. A first check valve is positioned upstream and in line with the suction port of the venturi and is positioned in parallel with the inlet port of the positive displacement pump. The first check valve is oriented in a closed position, substantially preventing fluid flow from the vacuum port of the centrifugal pump to the suction port of the venturi, and is actuatable to an open position, permitting fluid flow from the vacuum port of the centrifugal pump to the suction port of the venturi. A second check valve is positioned upstream and in line with the inlet port of the positive displacement pump and is positioned in parallel with the first check valve. The second check valve is oriented in a closed position, substantially preventing fluid flow from the vacuum port of the centrifugal pump to the inlet port of the positive displacement pump, and is actuatable to an open position, permitting fluid flow from the vacuum port of the centrifugal pump to the inlet port of the positive displacement pump. A control valve is positioned upstream and in-line with the venturi inlet port. The control valve has an inlet fluidly connected with the compressed air source and an outlet fluidly connected with the venturi inlet port. The control valve is actuatable between a closed position, substantially fluidly disconnecting the compressed air source from the venturi, and an open position, fluidly connecting the compressed air source with the venturi inlet port. The dual priming system is operational in a first mode, wherein the positive displacement pump is inactive and the venturi is activated, and a second mode, wherein the positive displacement pump is activated and the venturi is activated.

In one aspect, the positive displacement pump is an electric rotary vane-type positive displacement pump.

Another embodiment comprises a method of priming a centrifugal pump defining a casing with an inlet, an outlet and a vacuum port. The inlet is fluidly connectable with a liquid containing reservoir. The method includes connecting a dual priming system with the vacuum port of the centrifugal pump. The dual priming system includes a compressed air source and a positive displacement pump having an inlet port and a discharge port. The inlet port is fluidly connectable with the vacuum port of the centrifugal pump. A venturi has an inlet port, an outlet port and a suction port. The inlet port is fluidly connectable with the compressed air source and the suction port is fluidly connectable with the vacuum port of the centrifugal pump in parallel with the inlet port of the positive displacement pump. A first check valve is positioned upstream and in line with the suction port of the venturi and is positioned in parallel with the inlet port of the positive displacement pump. The first check valve is oriented in a closed position, substantially preventing fluid flow from the vacuum port of the centrifugal pump to the suction port of the venturi, and is actuatable to an open position, permitting fluid flow from the vacuum port of the centrifugal pump to the suction port of the venturi. A second check valve is positioned upstream and in line with the inlet port of the positive displacement pump and is positioned in parallel with the first check valve. The second check valve is oriented in a closed position, substantially preventing fluid flow from the vacuum port of the centrifugal pump to the inlet port of the positive displacement pump, and is actuatable to an open position, permitting fluid flow from the vacuum port of the centrifugal pump to the inlet port of the positive displacement pump. A control valve is positioned upstream and in-line with the venturi inlet port. The control valve has an inlet fluidly connected with the compressed air source and an outlet fluidly connected with the venturi inlet port. The control valve is actuatable between a closed position, substantially fluidly disconnecting the compressed air source from the venturi, and an open position, fluidly connecting the compressed air source with the venturi inlet port. The method further includes actuating the control valve into the open position thereof to fluidly connect the compressed air source with the venturi inlet port to permit compressed air to flow into the inlet port of the venturi, and, in turn, creating a vacuum at the suction port, and actuating the first check valve into the open position thereof to fluidly connect the vacuum port of the centrifugal pump with the suction port of the venturi, and, in turn, evacuating gas from the centrifugal pump casing.

In one aspect, the method further includes powering the positive displacement pump and actuating the second check valve into the open position thereof to fluidly connect the vacuum port of the centrifugal pump with the inlet port of the positive displacement pump to also evacuate gas from the centrifugal pump casing. In another aspect the powering step comprises electrically connecting a vehicle battery with the positive displacement pump.

Another embodiment comprises a system including a brushless direct current electric (BLDC) motor having a plurality of phases and a motor controller operatively connected to the plurality of phases of the BLDC motor and configured to selectively power rotation of the BLDC motor via the plurality of phases in a first mode and a second mode. When the motor controller powers rotation of the BLDC motor in the first mode, the motor controller is configured to (a) determine a current rotational position of the BLDC motor, (b) determine a subsequent rotational position of the BLDC motor to which the BLDC motor is to be rotated, (c) apply a first pulse width modulation (PWM) setting to one or more of the plurality of phases to cause the BLDC motor to rotate toward the subsequent rotational position, (d) responsive to detecting that the BLDC motor has reached the subsequent rotational position, apply a second PWM setting different from the first PWM setting to the one or more of the plurality of phases until expiration of a timer of predetermined duration, and (e) after expiration of the timer, return to step (a). When the motor controller powers rotation of the BLDC motor in the second mode, the motor controller is configured to (i) determine a current rotational position of the BLDC motor, (ii) determine a subsequent rotational position of the BLDC motor to which the BLDC motor is to be rotated, (iii) apply a third PWM setting to one or more of the plurality of phases to cause the BLDC motor to rotate toward the subsequent rotational position, and (iv) responsive to detecting that the BLDC motor has reached the subsequent rotational position, return to step (i).

In one aspect, the system further includes a foam pump having an input configured for fluid communication with at least one additive source and an output configured for fluid communication with a discharge conduit. The foam pump is driven by the BLDC motor to inject one or more chemical additives from the at least one additive source into the discharge conduit. In another aspect, the BLDC motor and the foam pump are provided in a common housing. In another aspect, the system further includes a source selector valve disposed upstream of the foam pump input and configured to enable selection of one of a plurality of additive sources for fluid communication with the foam pump input.

In another aspect, the system further includes a plurality of position sensors operatively connected to the motor controller and configured to detect the current rotational position of the BLDC motor.

In another aspect, the third PWM setting is different from the first and second PWM settings.

Another embodiment comprises a fire suppression system including a motor and a foam pump having an input configured for fluid communication with at least one off-board additive container and an output configured for fluid communication with a discharge conduit. The foam pump is driven by the motor to inject one or more chemical additives from the off-board additive container into the discharge conduit. A bypass valve is in fluid communication with the output of the foam pump. One or more sensors are configured to measure at least one operating condition of the foam pump. A controller is in communication with the one or more sensors and operatively connected to the bypass valve. The controller is configured to determine, based on data received from the one or more sensors regarding the at least one operating condition of the foam pump, whether the foam pump is experiencing a loss of prime. The controller is further configured to open the bypass valve in response to determining the loss of prime by the foam pump.

In one aspect, the one or more sensors include a fill level sensor configured for placement within the off-board additive container. The fill level sensor is configured to measure a level of additive within the off-board additive container. The controller is configured to determine the loss of prime by the foam pump based at least on finding the measured additive level below a predetermined threshold. In another aspect, the fill level sensor is one of an optical, inductive, or capacitive level sensor.

In another aspect, the controller is further configured to output an alert to the user in response to determining the loss of prime by the foam pump. In another aspect, the alert is at least one of a visual or an audible alert.

In another aspect, the one or more sensors include a flowmeter disposed downstream of, and in fluid communication with, the output of the foam pump. The flowmeter is configured to measure a flow rate from the output of the foam pump. The controller is configured to determine the loss of prime by the foam pump based at least on finding the measured flow rate below a predetermined threshold.

In another aspect, the one or more sensors include a pressure sensor disposed downstream of, and in fluid communication with, the output of the foam pump. The pressure sensor is configured to measure a pressure level from the output of the foam pump. The controller is configured to determine the loss of prime by the foam pump based at least on finding the measured pressure level below a predetermined threshold.

In another aspect, the controller is further configured to determine, based on data received from the one or more sensors regarding the at least one operating condition of the foam pump, whether the foam pump has regained prime. The controller is further configured to close the bypass valve in response to determining the regain of prime by the foam pump.

In another aspect, the controller is further configured to reduce an operating speed of the foam pump in response to determining the loss of prime by the foam pump.

In another aspect, at least one of the one or more sensors is configured for wireless communication with the controller.

In another aspect, the fire suppression system further includes a source selector valve disposed upstream of the foam pump input and configured to selectively enable and disable fluid communication between the off-board additive container and the input of the foam pump.

In another aspect, the fire suppression system further includes an off-board conduit having a first end in fluid communication with the input of the foam pump and a second end fitted with a suction wand.

Another embodiment comprises a valve checker system including a valve. The valve includes a valve housing having an inlet side, an outlet side, and a valve seat located therebetween, and a valve element disposed within the valve housing between the inlet side and the outlet side and in contact with the valve seat. The valve element has a sealing surface and a port formed therein. The valve element is selectively rotatable about a rotation axis between a first closed position, wherein the sealing surface contacts the valve seat and the port has a first orientation with respect to the inlet side and the outlet side of the valve housing to prevent fluid flow from the inlet side to the outlet side, and an open position, wherein the port has a second orientation with respect to the inlet side and the outlet side of the valve housing that allows fluid communication therebetween. A controller operatively is coupled to the valve element and is configured to perform a valve check operation by rotating the valve element from the first closed position to a second closed position, wherein the sealing surface contacts the valve seat and the port has a third orientation with respect to the inlet side and the outlet side of the valve housing to prevent fluid flow from the inlet side to the outlet side. The third orientation is different from the first orientation, and the sealing surface contacts the valve seat during the rotation from the first closed position to the second closed position. The valve check operation further includes rotating the valve element from the second closed position to the first closed position.

In one aspect, the valve checker system further includes a motor operatively coupled to the controller and the valve element. The motor is configured to rotate the valve element. The controller is further configured to determine an error at the valve when a current drawn by the motor exceeds a predetermined threshold. In another aspect, the valve checker system further includes at least one position sensor operatively coupled to the controller and arranged to detect a position of the valve element. The controller is further configured to determine an error at the valve when power is supplied to the motor, but the position sensor does not indicate a change in position of the valve element.

In another aspect, rotating the valve element from the first closed position to the second closed position results in a rotation of the valve element about the rotation axis of between about 4 degrees and about 9 degrees.

In another aspect, the controller is further configured to perform the valve check operation on a periodic basis.

Another embodiment comprises a chemical additive system for a firefighting vehicle. The system includes a main tube, a discharge port, a water pump having an input configured to connect with a water source and an output, a water valve arranged downstream of the output of the water pump and configured to selectively allow the output of the water pump to be in fluid communication with the main tube, an additive source configured to store a chemical additive, a source valve arranged downstream of the additive source and coupled to the main tube to selectively allow the additive source to be in fluid communication with the main tube, a foam pump having an input connected to the main tube and an output in fluid communication with the discharge port, an air supply, an air valve configured to selectively permit air from the air supply to pass toward the main tube, and a controller operatively coupled to the water pump, the water valve, the source valve, the foam pump, the air supply, and the air valve. The controller is configured to perform a flushing operation by opening the water valve, closing the air valve, closing the source valve, and controlling the water pump to move water from the water source through the main tube and the foam pump to the discharge port. The controller is further configured to perform a purging operation by opening the air valve to allow the air to move through the main tube and foam pump to the discharge port.

In one aspect, the air valve is located upstream of the water valve.

In another aspect, the system further includes a bypass valve disposed between the foam pump and the discharge port and configured to selectively divert at least some flow between the foam pump and the discharge port to a bypass line. The bypass valve is operatively connected to the controller. During the flushing operation and the purging operation, the controller is configured to orient the bypass valve to allow flow from the foam pump to pass to both the discharge port and the bypass line.

Another embodiment comprises a system for a firefighting vehicle. The system includes a main tube, a discharge port, a water pump having an input configured to connect with a water source and an output, a water valve arranged downstream of the output of the water pump and configured to selectively allow the output of the water pump to be in fluid communication with the main tube, and an off-board valve configured for connection to an off-board additive source containing a decontamination solution. The off-board valve is coupled to the main tube to selectively allow the decontamination solution to enter the main tube. A foam pump has an input connected to the main tube and an output in fluid communication with the discharge port. A bypass valve is disposed between the foam pump and the discharge port and is configured to selectively divert at least some flow between the foam pump and the discharge port to a bypass line. A controller is operatively connected to the water pump, the water valve, the off-board valve, the foam pump, and the bypass valve. The controller is configured to perform a decontamination operation by closing the water valve, opening the off-board valve, orienting the bypass valve to divert all flow from the main tube into the bypass line, and controlling the foam pump to move the decontamination solution from the off-board source through the main tube and the foam pump to the bypass line.

In one aspect, the bypass line runs through a heat exchanger.

In another aspect, the controller is further configured to, prior to the decontamination operation, perform a flushing operation by opening the water valve, closing the off-board valve, orienting the bypass valve to send flow from the main tube into the bypass line and to the discharge port, and controlling the water pump to move water from the water source through the main tube.

### BRIEF DESCRIPTION OF THE SEVERAL VIEWS OF THE DRAWINGS

The following detailed description of preferred embodiments will be better understood when read in conjunction with the appended drawings. For the purpose of illustration, there are shown in the drawings embodiments which are presently preferred. It should be understood, however, that the invention is not limited to the precise arrangements and instrumentalities shown.

In the drawings:
Fig. 1 is a left side perspective view of a generic floating industrial ball valve showing a distance of valve rotation before flow can occur, and a schematic representation of the valve's connection to a controller in accordance with an example embodiment;
Fig. 2 is a cross sectional view of an Akron ball valve for use in an example embodiment, showing angle of movement or dwell before the valve allows flow;
Fig. 3 is a schematic illustration of a dual priming system according to an example embodiment;
Fig. 4 is a schematic illustration of a dual priming system according to an alternative embodiment of the present disclosure;
Fig. 5 is a schematic block diagram of a fire suppression system utilizing a motor control in accordance with an example embodiment;
Fig. 6 is a schematic block diagram of a motor and motor controller in accordance with an example embodiment;
Fig. 7 is a flow chart of an exemplary method for operating the motor controller of Fig. 5;
Fig. 8 is a flow chart of a further exemplary method for operating the motor controller of Fig. 5;
Fig. 9A is an image of an oscilloscope trace for three phases of a motor and a timer under control in accordance with an example embodiment;
Fig. 9B is an enlarged portion of the oscilloscope trace of Fig. 9A;
Fig. 9C is an enlarged portion of the oscilloscope trace of Fig. 9B; and
Fig. 10 is a schematic block diagram of a portion of a fire suppression system utilizing an off-board foam container in accordance with an example embodiment;
Fig. 11 is a schematic block diagram of a first example embodiment of an additive system configured for an air purge operation;
Fig. 12 is a schematic block diagram of a second example embodiment of an additive system configured for an air purge operation;
Fig. 13 is a schematic block diagram of a portion of a fire suppression system utilizing an off-board container for decontamination in accordance with an example embodiment; and
Fig. 14 is a schematic diagram of a firefighting system with which the aspects and embodiments of the present disclosure may be utilized.

### DETAILED DESCRIPTION

Certain terminology is used in the following description for convenience only and is not limiting. The words "right", "left", "lower", and "upper" designate directions in the drawings to which reference is made. The words "inwardly" and "outwardly" refer to directions toward and away from, respectively, the geometric center of the device and designated parts thereof. The terminology includes the above-listed words, derivatives thereof, and words of similar import. Additionally, the words "a" and "an", as used in the claims and in the corresponding portions of the specification, mean "at least one." Unless stated otherwise, terms such as "first" and "second" are used to arbitrarily distinguish between the elements such terms describe. Thus, these terms are not necessarily intended to indicate temporal or other prioritization of such elements.

It should also be understood that the terms "about," "approximately," "generally," "substantially" and like terms, used herein when referring to a dimension or characteristic of a component, indicate that the described dimension/characteristic is not a strict boundary or parameter and does not exclude minor variations therefrom that are functionally similar. At a minimum, such references that include a numerical parameter would include variations that, using mathematical and industrial principles accepted in the art (e.g., rounding, measurement or other systematic errors, manufacturing tolerances, etc.), would not vary the least significant digit.

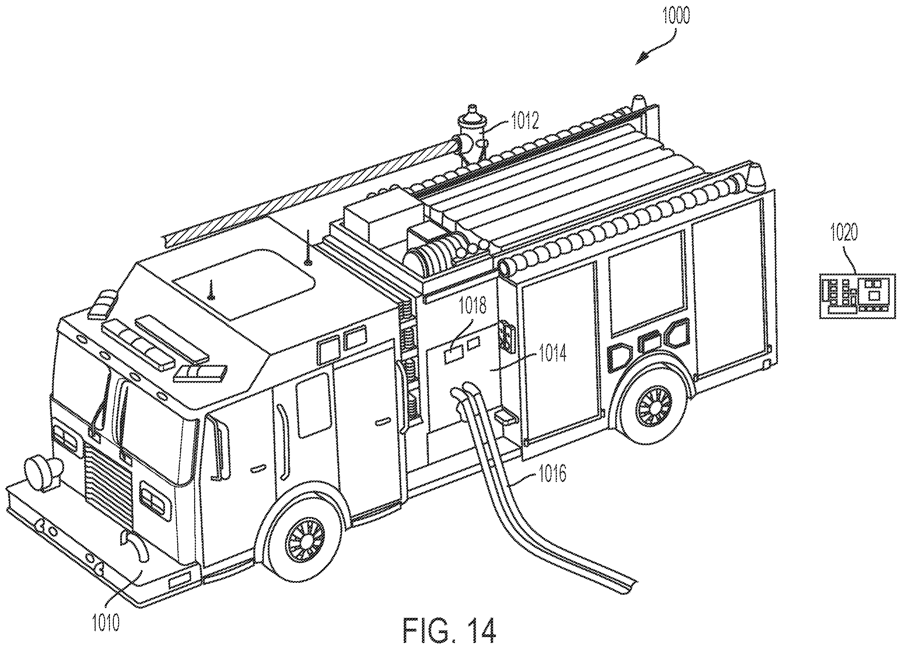

Referring to the drawings in detail, various aspects of a system for firefighting, at least a portion of which is implemented on a firefighting vehicle, are provided. In Fig. 14, a portion of an exemplary firefighting system 1000 is shown. A firefighting vehicle 1010 is equipped with various pumps, tanks, intakes, and discharges for supplying water and/or other chemical additives for fighting a fire. A fire hydrant 1012 may be one potential water supply connected to the firefighting vehicle 1010. The firefighting vehicle 1010 may be further equipped with a discharge panel 1014 connected to one or more discharge hoses 1016 used to disperse the water and/or chemical additives at the scene. Control of various valves, pumps, motors, and the like may be performed using one or more system controllers (not shown in Fig. 14) that may be operated using a touchscreen display interface 1018 or other similar type of user interface located at the discharge panel 1014 or elsewhere on the vehicle 1010. A control tablet 1020 may be provided in addition to or in place of the vehicle interface 1018 and may communicate wirelessly (or less preferably, over a wired connection) to the controllers at the vehicle 1010. For example, the firefighting vehicle 1010 may be equipped with the Scene Apparatus Management (SAM) system made by Hale Products Inc. to control the various operations for fighting a fire. The various aspects described below may be implemented in such a firefighting vehicle 1010 and be operated by a system such as the SAM system.

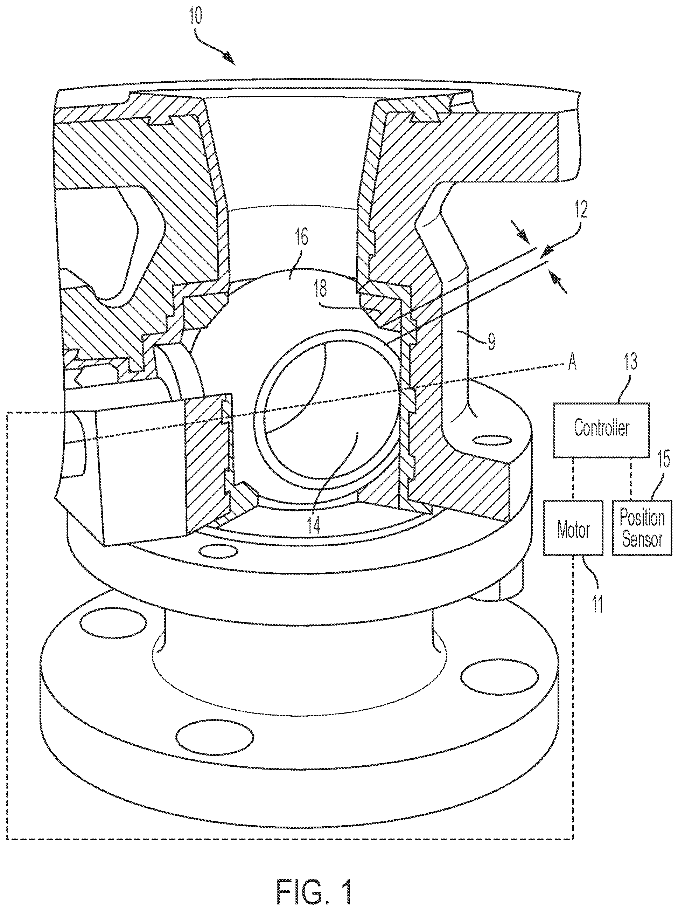

Figs. 1-2 show generic floating industrial ball valves suitable for use as pumper fire valves, the operability of which is checkable and capable of validation by an example embodiment of the fire truck valve checker.

Power operated ball valves as used in fire trucks have mechanical clearances between the components that drive the valve element (e.g., a ball or disk). A valve can be designed so that the ball can move a certain angle before the seal is un-ported and fluid begins to flow. The Akron ball valve (for example, Model 8825) allows nine degrees of ball rotation before the valve actually opens and flows water out of the valve. This valve also has position feedback. This allows the valve to be moved a small amount to 'break' stiction, the friction which tends to prevent stationary surfaces from being set in motion relative to each other. With a controller integrated into the fire pump such as the Hale SAM controller, an integrated total water flow control system that manages a pumper truck's pump, tank, intakes and discharges, or the Class 1 Sentry Pressure Governor System or Total Pressure Governor (TPG), the valve can be moved small amounts when the pump is not engaged and is not under pressure.

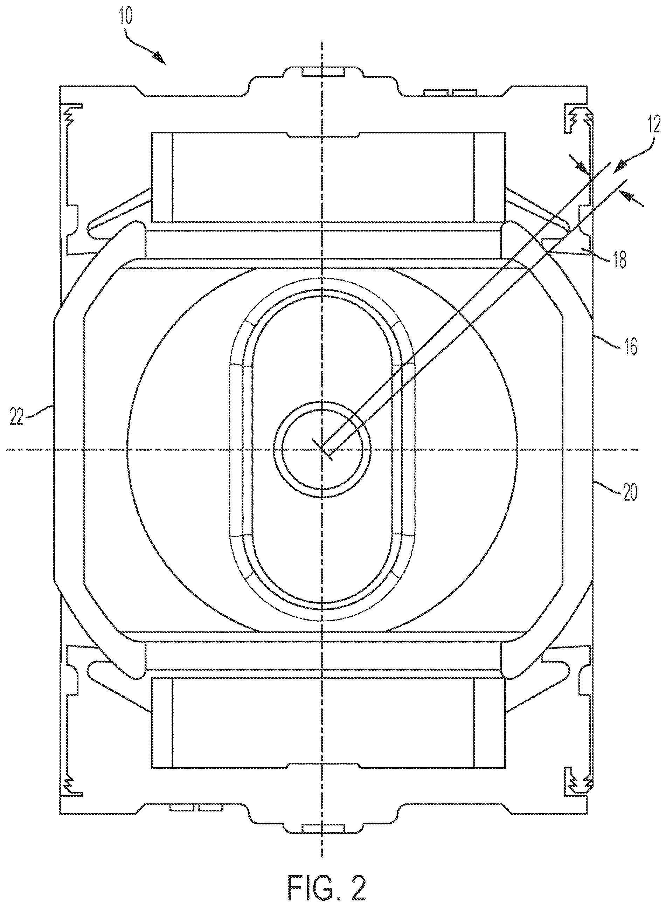

To illustrate the use of the fire truck valve checker to overcome stiction, a generic floating industrial ball valve 10 is shown in Figs. 1 and 2. The valve 10 has a measurable distance 12 between a port 14 on a ball 16 and a valve seat 18 within a valve housing 9. The ball 16 can move a discrete distance before the port (or hole) 14 in the ball 16 breaches the edge of the seal and allows flow to begin between the inlet side 20 and the outlet side 22 of the valve housing 9. The displacement is translated into the angle of rotation of the ball 16 about a rotational axis A and may be different for different types or designs of valves. Accordingly, the valve 10 can be designed to have more movement before the ball 16 is un-ported and flow begins by managing the relationship between the hole 14 in the ball 16 and the edge of the seal.

It is important to be able to move the valve ball or disk 16 without allowing fluid to flow as there may be water or water/firefighting agent solution on the other side of the valve 10 which may spill into preconnected hose or onto the ground.

A controller 13 can actuate the valves 10 to operate through a small valve movement that takes up the clearances in the valve 10 and moves the ball 14 less than about 9 degrees to break the seal sticking to the open position and then move back to the full closed position. The controller 13 may act on the ball 14 via a motor 11 coupled to the ball 14 for effecting rotation thereof about the rotational axis A. This action on each valve 10 can be accomplished while the pumper truck is driving down the road without impacting other activity. Because the Akron valve has both position sensing feedback and powered operation, the valve operation can be checked without it being actually used. Certain defects like a broken motor or electronics or a number of mechanical failures can be detected and warnings or alerts for service needed sent to the operator locally or transmitted to the fleet manager via the web thru a system like the IDEX Class 1 Captium system. This allows preventative service action to fix the defect before the valve is needed at an emergency or the valve can be tagged out of service and not used until it is repaired.

A valve such as the MIV (Master Intake Valve) manufactured by Hale has limit switches but not positional feedback. This type of valve can still be included in this valve checking concept. The controller 13 applies power until the closed limit switch changes state. Then the controller 13 applies power for a short period of time after that to allow the valve to move about 4-7 degrees ,which allows the seats to move and be exercised and then the valve is returned to the fully closed position. The motor speed and therefore the movement of the valve is predicted by the voltage available at the controller. Since a DC motor 11 is used, the power at the motor is directly related to the voltage available.

The salient features of example embodiments of the fire truck valve checker may include, but are not limited to the following:

If power is applied to the actuator motor 11 for a period of time without a position sensor 15 showing movement of the ball 14 or the limit switch changing state, then the controller 13 determines a defect or problem at the valve 10 and this is reported.

The electronics hardware can detect motor current and while the max motor current for the Akron valve (8xxx) valve is, for example, 10 amps, the current draw without pressure on the valve (as it would be when checked ) is much less at 4 amps. If it requires more than 4 amps at nominal voltage to move the valve (without pressure) then there is a problem determined by the controller 13. Whether the problem is mechanical restriction or electrical, the problem is reported so this valve is not expected to work in an emergency.

The valves can be cycled one at a time so the electrical load on the vehicle / apparatus electrical system does not see an excessive load.

Different valves have different dwell times that determine how long they sit before they start to stick. So, the controller can be set up to move the valves before they stick. Typically, once per day is an average value. Smaller valves with more rigid seats can have longer times between being moved.

The amount of valve movement to prevent sticking can be programable to match the design of the valve and the valve design can be arranged to allow adequate movement to make this valve exerciser / checker invention practical.

The control system to check or actuate the valves can be deployed to a networked arrangement of valves to command the valves to operate through the valve checker routine or can be applied to powered valves individually as part of a standalone valve package.

The concept could apply to air operated valves by using a three position air cylinder that allowed the valves to move the small amount needed for valve checking or the full operational valve movement.

The concept could be applied to manually operated valves by adding a short stroke air actuator that again can move the valve through the small rotation needed to check the valve operation and prevent sticking. This actuation could be built into the valve or the manual actuator and incorporates a lost motion feature to allow full travel of the valve to be operated manually through the full range of motion.

The practical advantages of the example embodiments of the fire truck valve checker described above may include, but are not limited to the following:
1. A system that operates valves a small discrete amount that exercises valves to help make sure they are not stuck and operate when needed;
2. A system that is programmed to move valves without opening them so far that any water behind them comes out. This is done by making sure the pump is not spinning and there is no pressure on the pump and moving the valve element only a small amount;
3. A system that is set up to automatically operate the valve on a regular basis when the pump is not being used;
4. A system that allows different size and types of valves to be exercised on different schedules to prevent sticking;
5. A system that is configurable for different amounts of movement to meet the requirements of different valve designs;
6. A system that can be applied to individual valves or a networked controller; and
7. A system that can be applied to manually actuated valves by adding a small motion actuator in addition to powered valves.

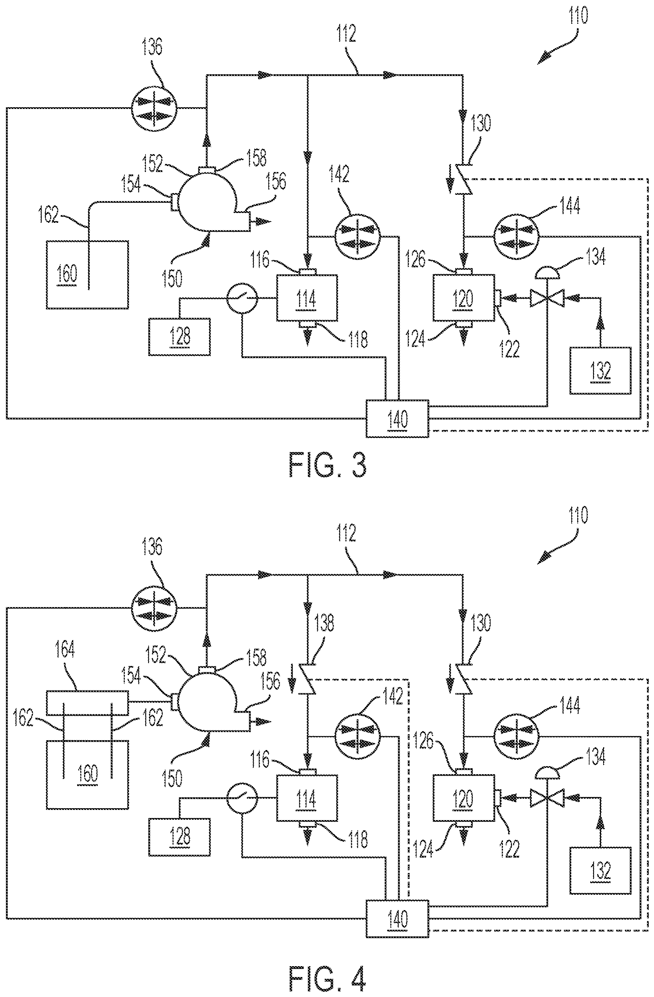

Referring now to Fig. 3, there is shown a schematic diagram of a dual priming system 110 for a centrifugal pump 150, such as on an automotive fire apparatus, e.g., a fire truck, in accordance with an example embodiment of the present disclosure. As should be understood, the centrifugal pump 150 defines a casing 152 with an inlet 154, an outlet 156 and a vacuum port 158. The inlet 154 is fluidly connectable with a liquid containing reservoir 160 in a manner well understood by those of ordinary skill in the art, e.g., via at least one intake 162 (see, e.g., two intakes 162 in Fig. 4 connected to the pump 150 via manifold 164) in the form of a line, hose or the like. The liquid, e.g., water, within the reservoir 160 may be static.

The dual priming system 110 is connected with the vacuum port 158 of the centrifugal pump 150 via a vacuum conduit 112 and is configured to evacuate gas from the centrifugal pump casing 152 and draw liquid from the reservoir 160 into the centrifugal pump casing 152. As shown in Fig. 3, the dual priming system 110 includes a positive displacement pump 114 and a venturi 120 fluidly connected with the vacuum port 158 of the centrifugal pump 150 in parallel with one another. In one configuration, the positive displacement pump 114 may take the form of an electric rotary vane-type positive displacement pump, such as, for example, without limitation, the model ESP pump sold by Hale Products Inc. Alternatively, for example, the positive displacement pump 114 may be driven by a clutch drive (not shown) off the centrifugal pump 150 or a gearbox (not shown) of the centrifugal pump 150, in a manner well understood by those of ordinary skill in the art. One advantage of the positive displacement pump 114 is the generation of relatively strong suction/vacuum. The positive displacement pump 114, however, draws between approximately 275 to 300 amps from a power source in order to generate such suction. While not generating as much suction/vacuum as the positive displacement pump 114, one advantage of the venturi 120 is that it utilizes a separate energy source and is quieter to operate than the positive displacement pump 114.

The positive displacement pump 114, operable in a manner well understood by those of ordinary skill in the art, includes a suction inlet port 116, a discharge port 118 and a rotor (not shown) therebetween. The inlet port 116 is fluidly connected with the vacuum port 158 of the centrifugal pump 150 via the vacuum conduit 112. Without operation of the positive displacement pump 114, fluid within the vacuum port 158 is substantially prevented from exiting from the discharge port 118. A power source 128 is electrically connectable to the positive displacement pump 114 for activation thereof. For example, without limitation the power source 128 may take the form of a vehicle battery, such as that of a fire truck, electrically connectable to the positive displacement pump 114 in a manner well understood by those of ordinary skill in the art.

The venturi 120, operative in a manner well understood by those of ordinary skill in the art, also includes an inlet port 122, an outlet port 124 and a suction port 126, fluidly connected in a manner well understood by those of ordinary skill in the art. The suction port 126 is fluidly connectable with the vacuum port 158 of the centrifugal pump 150 via the vacuum conduit 112 in parallel with the inlet port 116 of the positive displacement pump 114. A check valve 130 is positioned upstream, and in line with, the suction port 126 of the venturi 120. As shown in Fig. 1, the check valve 130 is positioned in parallel with the inlet port 116 of the positive displacement pump 114. That is, the check valve 130 is positioned to fluidly connect or disconnect the venturi 120 with the vacuum port 158 of the centrifugal pump 150, without affecting the connectivity of the positive displacement pump 114 with the vacuum port 158 of the centrifugal pump 150. In one configuration, the check valve 130 may take the form of a pressure operated check valve, e.g., a spring-biased check valve or the like, being biased into in a closed position, substantially preventing fluid flow from the vacuum port 158 of the centrifugal pump 150 to the suction port 126 of the venturi 120, and being actuatable to an open position when a pressure differential across the check valve 130 exceeds the cracking pressure thereof (as will be described in further detail below), permitting fluid flow from the vacuum port 158 of the centrifugal pump 150 to the suction port 126 of the venturi 120. Alternatively, the check valve 130 may take the form of a solenoid valve actuatable between open and closed positions independent of the pressure differential across the valve 130. Where a solenoid valve 130 is employed, the solenoid valve 130 is electrically connected with a controller 140 (as will be described in further detail below).

The inlet port 122 of the venturi 120 is fluidly connectable with a source of motive fluid, such as with a compressed air source, e.g., reservoir, 132. For example, without limitation, in emergency services applications, such as priming a centrifugal pump 150 on a fire truck, the compressed air source 132 may emanate from the air brake system of the fire truck. A control valve 134 is positioned upstream and in-line with the venturi inlet port 122, fluidly connected with the compressed air source 132 on an inlet side and fluidly connected with the venturi inlet port 122 on an outlet side. In one configuration, the control valve 134 may take the form of a solenoid valve, but the disclosure is not so limited. For example, without limitation, the control valve 134 may alternatively or additionally take the form of a manually actuatable control valve. The control valve 134 is actuatable between a closed position, substantially fluidly disconnecting the compressed air source 132 from the venturi inlet port 122, and an open position, fluidly connecting the compressed air source 132 with the venturi inlet port 122.

A controller 140 is operatively connected, in a manner well understood by those of ordinary skill in the art, to certain of the components of the dual priming system 110 (as will be described in further detail below) in order to effectuate activation/deactivation of the respective components. The controller 140 may take the form of any suitable controller, currently known or that later becomes known, such as, for example, without limitation, a microprocessor, multiple processors, or the like. The controller 140 may include, or may be operatively coupled to (wired or wirelessly), a user interface (not shown) for sending commands to the controller 140. The user interface may take the form of hardware, software or a combination thereof, for a user to select the desired operation of the dual priming mechanism 110. For example, without limitation, the user interface may take the form of at least one of a touch screen having digital input keys (not shown) and a control panel having physical input keys (not shown). The controller 140 may also include, or may be operatively coupled to, a memory (not shown) that stores the code or software for carrying out the selected operation of the dual priming system 110. The memory may take the form of any known, unknown or otherwise suitable memory device such as a read only memory (ROM) or the like.

The dual priming system 110 is configured to operate in a first, "low load" mode wherein the positive displacement pump 114 is inactive and the venturi 120 is activated, or a second, "high load" mode wherein both the positive displacement pump 114 and the venturi 120 are activated to produce stronger suction power. Advantageously, the dual priming system 110 has the capability of quieter operation in the first mode thereof, i.e., during light duty priming operations, such as, for example, when the reservoir 160 is nearby the centrifugal pump 150 and/or when there is low vertical lift between the reservoir 160 and the centrifugal pump 150. Further advantageously, the dual priming system 110 has the capability of generating greater priming power (than utilizing a positive displacement pump 114 alone) in the second mode thereof, i.e., during heavy duty priming operations, such as, for example, when the reservoir 160 is further from the centrifugal pump 150 and/or when there is greater vertical lift between the reservoir 160 and the centrifugal pump 150. In one configuration, without limitation, operation of the dual priming system 110 in the second mode thereof can prime approximately one and a half times faster than utilizing a positive displacement pump 114 alone. The dual priming system 110 is also configured to switch between operating modes as necessary. For example, the dual priming system 110 may initially operate in the second mode thereof and then switch into the first mode for a predetermined interval after the system is nominally primed. Optionally, the dual priming system 110 may also be configured to operate in a third mode, wherein the positive displacement pump 114 is activated while the venturi 120 is inactive.

The controller 140 is configured to select an optimum mode of operation according to the priming load encountered by the dual priming system 110. Several factors, alone or in combination, may be utilized for the controller 140 to assess low load or high load conditions. For example, the dual priming system 110 may include a sensor 136 positioned proximate the inlet 154 of the centrifugal pump 150, or, alternatively, proximate the vacuum port 158, and operatively connected with the controller 140 and configured to transmit measurements of the vacuum level at the inlet 154 of the centrifugal pump 150 to the controller 140 continuously or at predetermined intervals, e.g., every one, two or five seconds. In one configuration, without limitation, the sensor 136 may take the form of a compound vacuum and pressure transducer. Optionally, the dual priming system 110 may also include at least one of a sensor 142 proximate the suction inlet port 116 of the positive displacement pump 114 and a sensor 144 proximate the suction port 126 of the venturi 120, operatively connected with the controller 140, to transmit additional measurements of vacuum levels to the controller 140.

The controller 140 may be programmed to operate in the first mode at or above a threshold vacuum level and operate in the second mode at or below the threshold vacuum level. Additionally, or alternatively, the controller 140 may be programmed to operate in the first mode at or above a threshold rate of vacuum generation and operate in the second mode at or below the threshold rate of vacuum generation. The threshold vacuum level and the threshold rate of vacuum generation are predetermined according to operating characteristics of the priming devices. As one non-limiting example, if the vacuum level does not increase by 2 inHg within a predetermined time interval, e.g., five or ten seconds of operation in the first mode, the controller 140 may switch the dual priming system 110 into the second mode thereof. Further additionally, or alternatively, the controller 140 may be programmed to operate in the first mode or the second mode according to a number, size and location of the intake(s) 162 being primed, the size (internal volume) of the pump 114, or a combination thereof.

As should be understood by those of ordinary skill in the art, the less intakes 162 being utilized, the smaller the size of the intake(s) 162, or the closer the reservoir 160 to the pump 150, thereby requiring shorter intakes 162, the less the load, i.e., the less gas to evacuate, of the dual priming system 110. The intakes 162 can add significant volume which requires evacuation by the priming system 110, which may be different for each deployment of the pump 150. In applications where the reservoir 160 is further away from the centrifugal pump 150, requiring longer or more intakes 162, the controller 140 may activate both the positive displacement pump 114 and the venturi 120 to match the load, i.e., the priming system 110 may operate in a second mode, as described below. In certain applications, a portable folding tank (not shown), such as those manufactured by the Fol-Da-Tank^{®} Company may be placed proximate to the centrifugal pump 150, shortening the intake 162 between the tank and the pump 150 and reducing the priming load compared to a natural static water source, such as a pond, which may be further away from the pump 150, thereby requiring a longer intake 162 or multiple intakes 162. In the situation of lower load or less gas to evacuate, the requisite vacuum will generate more quickly. The controller 140 may also include a manual mode, or a manual override mode, selectable via the user interface, wherein a user can manually select the mode of operation of the dual priming system 110.

In operation, the dual priming system 110 may initially power on in either the first mode or the second mode, e.g., according to a user specified setting. In the first mode, the controller 140 actuates the control valve 134 (operatively connected thereto) into the open position thereof, thereby permitting the compressed air from the compressed air source 132 to flow into the venturi 120 via the inlet port 122, and, in turn, generate a vacuum at the suction port 126. Where a pressure operated check valve 130 is employed, the check valve 130 is actuated into the open position thereof once a pressure differential across the check valve 130 is greater than the cracking pressure thereof. Where a solenoid type check valve 130, operatively connected to the controller 140, is employed, the controller 140 also actuates the check valve 130 into the open position thereof. The suction port 126 of the venturi 120 is thereby fluidly connected with the vacuum port 158 of the centrifugal pump 150 via the vacuum conduit 112 to suction and evacuate gas from the centrifugal pump casing 152 and draw liquid from the reservoir 160 into the centrifugal pump casing 152.

In the second mode, the controller 140 also connects the power source 128 with the positive displacement pump 114 (in a manner well understood by those of ordinary skill in the art, e.g., via activating a switch) to activate the pump 114. Operation of the pump 114 suctions and evacuates gas from the centrifugal pump casing 152 in parallel with the venturi 120, thereby resulting in greater and faster priming. When switching from the second mode to the first mode, the controller 140 disconnects the power source 128 from the positive displacement pump 114. To switch off the venturi 120, the controller 140 actuates the control valve 134 into the closed position thereof. As should be understood by those of ordinary skill in the art, the dual priming system 110 may alternatively initially operate in the third mode, and thereafter switch into the first or second modes.

Optionally, as shown in Fig. 4, the dual priming system 110 may also include a second check valve 138 positioned upstream, and in line with, the suction inlet port 116 of the positive displacement pump 114. The check valve 138 is positioned in parallel with the check valve 130. Similarly, to the check valve 130, the check valve 138 is positioned to fluidly connect or disconnect the positive displacement pump 114 with the vacuum port 158 of the centrifugal pump 150. In one configuration, the check valve 138 may take the form of a pressure operated check valve, e.g., a spring-biased check valve or the like, being biased into in a closed position, substantially preventing fluid flow from the vacuum port 158 of the centrifugal pump 150 to the suction inlet port 116 of the positive displacement pump 114, and being actuatable to an open position when a pressure differential across the check valve 138 exceeds the cracking pressure thereof, permitting fluid flow from the vacuum port 158 of the centrifugal pump 150 to the suction inlet port 116 of the positive displacement pump 114. Alternatively, the check valve 138 may take the form of a solenoid valve actuatable between open and closed positions independent of the pressure differential across the valve 138.

In operation, and where a pressure operated check valve 138 is employed, the check valve 138 is actuated into the open position thereof when the controller 140 connects the power source 128 with the positive displacement pump 114 to activate the pump 114, and, in turn, the pump 114 generates a pressure differential across the check valve 138 that is greater than the cracking pressure thereof. Where a solenoid type check valve 138 (operatively connected to the controller 140) is employed, the controller 140 actuates the check valve 138 into the open position thereof in addition to connecting the power source 128 with the positive displacement pump 114 to activate the pump 114. The suction inlet port 116 of the positive displacement pump 114 is thereby fluidly connected with the vacuum port 158 of the centrifugal pump 150 via the vacuum conduit 112 to suction and evacuate gas from the centrifugal pump casing 152 and draw liquid from the reservoir 160 into the centrifugal pump casing 152.

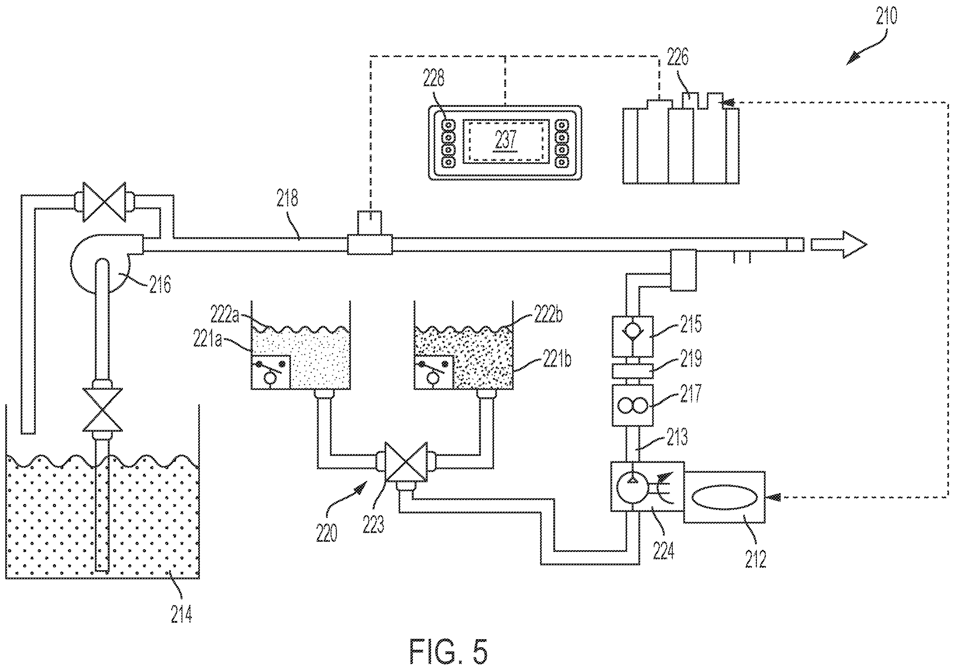

Referring to Fig. 5, there is shown an exemplary fire suppression system, generally designated 210, utilizing a motor 212 controlled in accordance with an example embodiment. The fire suppression system 210 preferably includes a water source 214 (such as a water tank) coupled to a water pump 216 responsible for moving water from the water source 214 to a discharge conduit 218. The water tank 214 may be filled through a connection to a positive water pressure supply (not shown), such as a conventional fire hydrant, although the tank 214 may, in some applications, be omitted such that the water is provided directly to the discharge conduit 218 by the hydrant supply. The fire suppression system 210 may be mounted on a vehicle (not shown), such as a fire truck, having an engine (not shown) that may be operatively connected to the water pump 216 for driving or powering of the water pump 216.

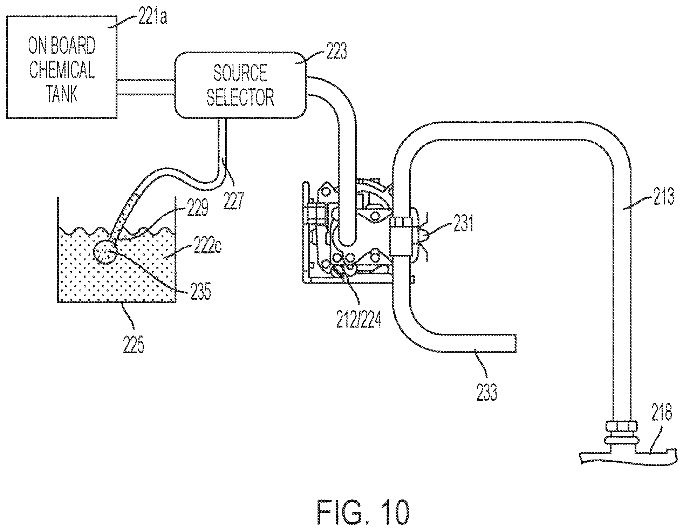

The fire suppression system 210 further preferably includes an additive proportioning system 220 that provides one or more chemical additives (e.g., foamants) 222a, 222b that may be stored in on-board tanks 221a, 221b or in one or more off-board containers 225 (Fig. 10). The additive proportioning system 220 is in fluid communication with the discharge conduit 218 via a foam pump 224 driven by the motor 212, which, like the water pump 216, may be powered by the vehicle engine, although other power sources may be used as well. The motor 212 and foam pump 224 may be provided in a combined housing, as shown, for example, in Fig. 10. A foam injection conduit 213 is provided having one end connected to an output of the foam pump 224, and an opposite end connected to the discharge conduit 218. A one-way check valve 215 is preferably provided proximate the connection between the foam injection conduit 213 and the discharge conduit 218 to prevent water in the discharge conduit 218 from diverting into the foam injection conduit 213 toward the foam pump 224.

The motor 212 may be in communication with a motor controller 226, which can be integrated with the motor 212, mounted at or proximate thereto, or mounted elsewhere on the vehicle. The motor 212 and motor controller 226 may communicate either wirelessly or via a wired connection. An operator interface 228 may be integrated with the motor controller 226 or may be mounted separately and in communication with the motor controller 226 via a wired or wireless connection. The operator interface 228 may be a graphical user interface (GUI) with a touchscreen, push buttons, switches, or the like. In use, an operator may, via the operator interface 228, select a desired speed for the motor 212, as well as the specification of one or more foamants 222a, 222b, and other related parameters. The motor controller 226 then operates the motor 212 in accordance with the selected parameters, as described in further detail below, such that the foam pump 224 injects the selected foamant(s) 222a, 222b into the discharge conduit 218 to mix with the flowing water.

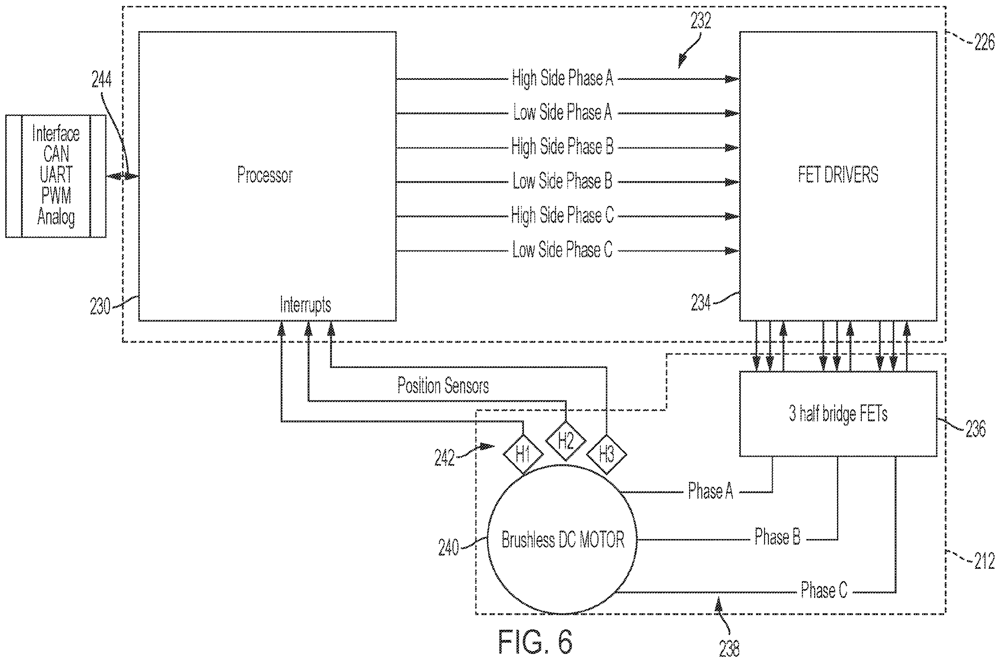

Referring to Fig. 6, the motor controller 226 preferably includes a processor 230 or other like computing device configured to receive input from various sensors and the operator interface 228 and output signals for adjusting and controlling the motor 212 accordingly. While shown as a single processor 230, the functionality may also be divided among multiple devices. The processor 230 preferably includes a plurality of phase outputs 232 coupled to a plurality of drivers 234 to drive a corresponding number of switches (for example, a plurality of FETs) 236 in the motor 212 to deliver power to the phases 238 of a brushless DC motor 240. As shown in Fig. 6, the brushless DC motor 240 has three phases 238, but more or fewer phases may be utilized, as desired.

As is conventional, a plurality of position sensors 242 may be placed to detect the position of the brushless DC motor 240 as it rotates. The position sensors 242 may be of any type, such as Hall-effect switches, optical encoders, giant magnetoresistance sensors, or the like, and preferably feed back to the processor 230 to provide interrupt signals for triggering phase switching during operation of the brushless DC motor 240. Position of the brushless DC motor 240 can also be determined in ways excluding the use of such physical position sensors, such as by detecting back-EMF in the passive phase 238 of the motor 212.

The processor 230 may also be in communication with other devices via one or more ports 244 capable of operation as one of various types of interfaces, for example, a connected area network (CAN), Universal Asynchronous Receiver/Transmitter (UART), pulse-width modulation (PWM), other conventional analog interfaces, or the like.

While the phase outputs 232 and drivers 234 are shown to be housed within the motor controller 226 and the switches 236 and position sensors 242 are shown to be within the motor 212, such components can be arranged in other configurations and housed separately from one another or housed together in other combinations. For example, the drivers 234 may be housed within the motor 212, or the switches 236 may reside in the motor controller 226.

During ordinary operation, at low rotation speeds (for example, single digit RPMs, although higher speeds may also suffer from this drawback depending on the load and the capabilities of the brushless DC motor 240), the brushless DC motor 240 will not have sufficient torque to drive the foam pump 224. To address this issue, the motor controller 226 is programmed to, at least at selected low motor speeds, operate the brushless DC motor 240 such that application of commutating current to various phases 238 of the brushless DC motor 240 is based on both position and time. That is, the brushless DC motor 240 is preferably commutated at periodic time intervals instead of as a sole result of detected position. As will be described in more detail below, a timer is set to commutate the brushless DC motor 240 to its next position at periodic intervals, and once the brushless DC motor 240 reaches the next position, the motor controller 226 will hold the brushless DC motor 240 at that position until the next interval.

Preferably, the motor 212 can operate in this first, "slow" mode when low speeds are selected, while the motor 212 preferably operates in a second, "normal" mode at more conventional brushless DC motor speeds at which sufficient torque is generated. The threshold may be established as the speed at which the brushless DC motor 240 does not reach its next position before the timer fires again. This threshold is motor and load dependent and may be predetermined and stored in the motor controller 226 or may be determined during operation based on measured loads, the determined condition of the brushless DC motor 240, and the like. The motor controller 226 also preferably is able to select or switch between the first and second modes of operation based on the speed selected at the operator interface 228, detected speed changes, detected motor effectiveness, or the like. Alternatively, the user may be able to manually select between modes at the operator interface 228. In still other embodiments, the motor 212 may operate in the first mode at all speeds of the brushless DC motor 240.

PWM is preferably utilized to control the power of the brushless DC motor 240 motion, and preferably implements two PWM settings: a first "moving" PWM setting and a second "holding" PWM setting. Preferably, the first PWM setting is applied when initially moving the brushless DC motor 240 from its current position to the next position. Then, the second PWM setting is preferably applied when the brushless DC motor 240 arrives at the next position and continues until the timer fires again, at which time the process repeats. The second PWM setting is preferably lower than the first PWM setting and is designed to reduce the current draw while the brushless DC motor 240 is waiting to advance to the next position, thereby reducing overall current draw by the motor 212 and heat generation, while still providing sufficient torque at low speeds. Both the first and second PWM settings, while adjustable between 0-100% duty cycle, are preferably selected to be as low as possible for the desired application, thereby conserving as much current as possible. Current conservation is particularly important when implementing the motor 212 in a vehicle, where power is a limited resource restricted by the typical 12 or 24 V power supply. The motor controller 226 may transition between the first and second PWM settings substantially immediately upon detection of necessary conditions or may change gradually. In alternative embodiments, additional PWM settings may be utilized during operation, if desired. Moreover, when the motor 212 is to be operated in the second "normal" mode, the first PWM setting is preferably applied, although a different PWM setting from those used in the first "slow" mode may be used instead.

For example, a ten pole brushless DC motor 240 will have thirty positions in one rotation (6 steps per internal cycle multiplied by 5 pole pairs). Thus, in the first "slow" mode of operation, the motor controller 226 will commutate the brushless DC motor 240 by 12° (360°/30) using the first PWM setting. The brushless DC motor 240 will then be held at this position using the second PWM setting until the timer fires again, causing the brushless DC motor 240 to commutate another 12° under the first PWM setting, and so on.

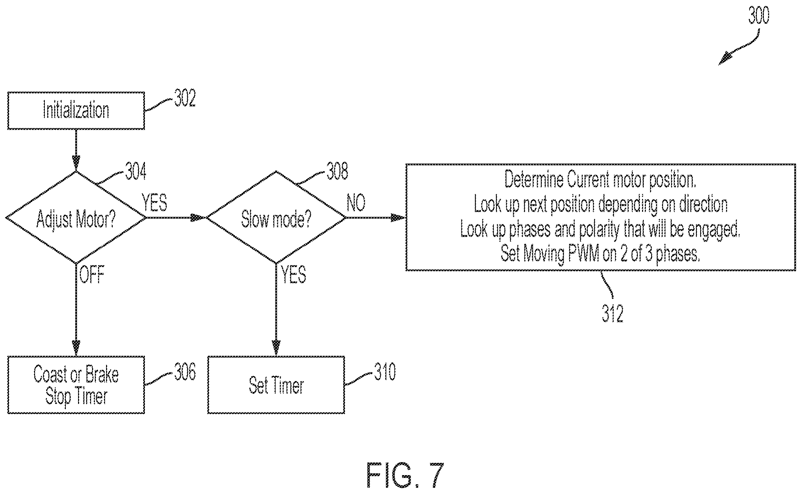

Fig. 7 shows an exemplary method 300 executed by the motor controller 226 when selecting a new motor speed. At step 302, the motor controller 226 may be initialized, either by powering on, waking from sleep, receiving a speed adjustment or a power-off instruction, or the like. At step 304, the motor controller 226 preferably determines whether the brushless DC motor 240 requires adjustment. If the motor controller 226 determines that the brushless DC motor 240 is to be shut off (assuming the brushless DC motor 240 is currently in motion), the motor controller 226 at step 306 may affirmatively brake the brushless DC motor 240 or allow the brushless DC motor 240 to slow to a halt. In addition, if the timer is running, the motor controller 226 will preferably stop the timer at step 306.

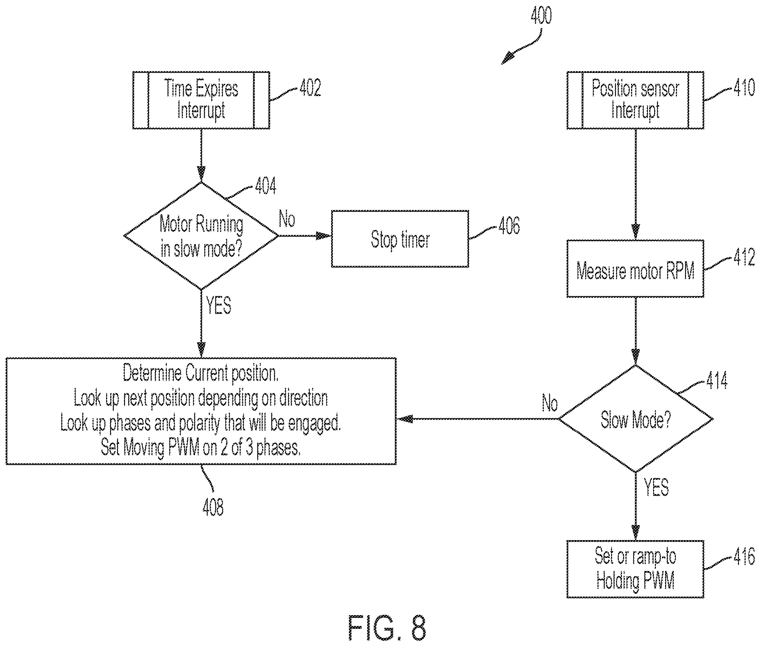

If the motor controller 226 determines that the brushless DC motor 240 requires adjustment at step 304, then the motor controller 226 preferably moves to step 308 to determine if the motor 212 is to operate in the first "slow" mode. If so, the motor controller 226 may move to step 310 and set the timer according to the selected speed. The motor controller 226 then may enter a first mode method 400 (e.g., Fig. 8), which will be described in further detail below. If, at step 308, the motor controller 226 determines that the motor 212 is not to be in the first mode, but instead, for example, the second mode, the motor controller 226 preferably moves to step 312. At step 312, the motor controller 226 preferably determines the current position of the brushless DC motor 240, determines the next position depending on the rotation direction, determines the phases 238 and polarities to be applied, and applies the first "moving" PWM setting accordingly. From this point, the motor 212 would preferably be operated in the second mode, i.e., in typical fashion for a brushless DC motor.

Fig. 8 illustrates an exemplary method 400 executed by the motor controller 226 to operate the motor 212 in the first mode. At step 402, the timer preferably triggers an interrupt signal to the processor 230, after which the motor controller 226 preferably checks that the motor 212 is still to be in the first mode (step 404). If not, at step 406 the motor controller 226 may stop the timer. If, on the other hand, the answer at step 404 is "yes," the motor controller 226 preferably moves to step 408 to determine the current position of the brushless DC motor 240, determine the next position depending on the rotation direction, determine the phases 238 and polarities to be applied, and apply the first "moving" PWM setting accordingly.

At step 410, an interrupt is preferably sent to the processor 230 from one or more position sensors 242, which indicates that the brushless DC motor 240 has reached its next position. At step 412, the motor controller 226 may determine the speed of the brushless DC motor 240. At step 414, the motor controller 226 preferably checks that the motor 212 is still to be in the first mode. If so, the motor controller 226 preferably sets or ramps to the second "holding" PWM setting at step 416. At this point, the motor controller 226 preferably awaits the next timer interrupt at step 402 and repeats the process. If, at step 414 the motor controller 226 determines that the motor 212 is not to be in the first mode, the motor controller 226 reverts to step 408 and preferably operates in the second mode thereafter.

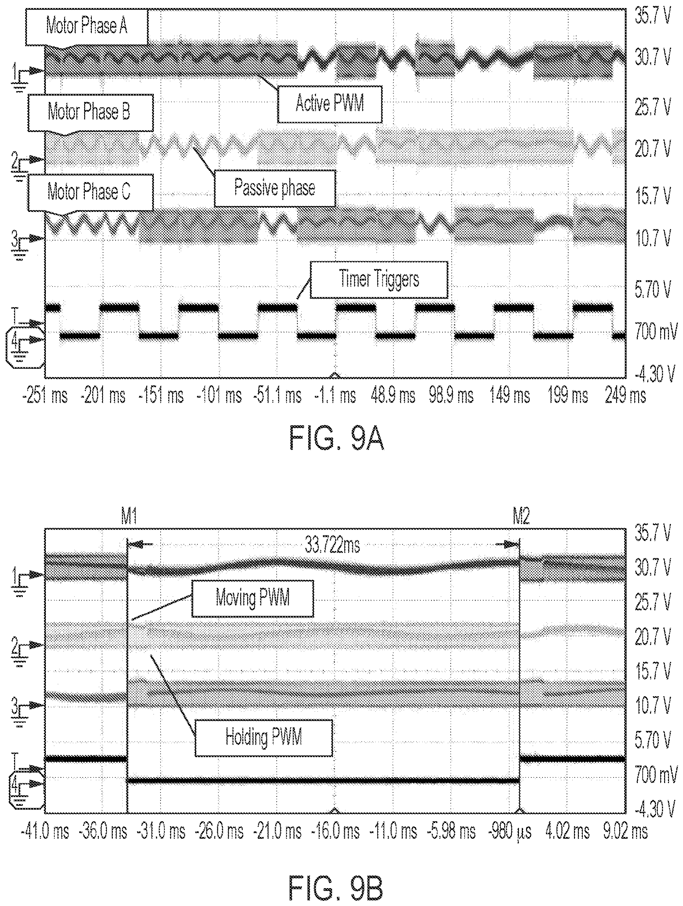

Fig. 9A is an image of an exemplary oscilloscope trace for three phases of a motor 212 running in accordance with an embodiment of the present invention. The brushless DC motor 240 in this example is running at approximately 60 RPM (1 Hz). Fig. 9A shows three motor phases A, B, and C. As can be seen in the figure, the PWM is applied to two of the three phases A, B, C at any one time. Fig. 9A further shows the timer pulse waveform, which reverses polarity periodically. Each pulse coincides with active and passive periods of various combinations of the three phases A, B, C.

Fig. 9B is an enlarged image to focus on one pulse duration of the timer waveform. In Fig. 9B, phase A is passive for the duration of the complete visible timer pulse, while phases B and C are active. The timer pulse is approximately 33 milliseconds. In phases B and C, the first PWM setting is applied initially by the motor controller 226, triggered by the timer pulse, to move the brushless DC motor 240 to its next position. In this example, the first PWM setting is applied for approximately 2 milliseconds. Afterward, for the duration of the timer pulse, the second PWM setting is applied to both phases B and C, to hold the brushless DC motor 240 in position.

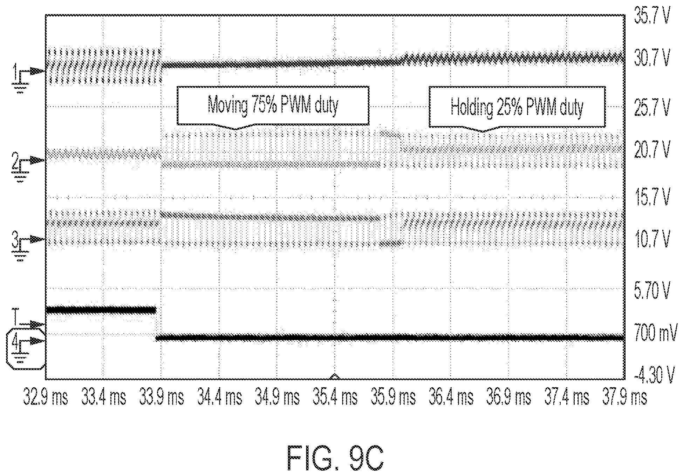

Fig. 9C is an even further enlarged image to more clearly show the difference between the first and second PWM settings as applied to phases B and C. In the example shown in Fig. 9C, the first PWM setting is at about 75% duty cycle, while the second PWM setting is at about 25% duty cycle.

While the embodiments described herein have been directed to a motor implemented within a fire suppression system, operation of a motor in the fashion described above is equally applicable to other applications wherein a low speed, high torque motor may be required. Moreover, operation of the motor as described herein is not limited to applications which are vehicle-mounted and can be utilized with any power source driving the motor.

The fire suppression system 210 described above may further include improved additive functionality. Referring to Figs. 5 and 10, the additive proportioning system 220 may include a source selector valve 223 that allows the user to connect one or more of the on-board tanks 221a, 221b or one or more off-board containers 225 (Fig. 10) to an input of the foam pump 224. The source selector valve 223 may be actuated by the user either manually, for example by a handle (not shown) at the source selector valve 223, or electronically, for example via the operator interface 228 or another electronic control panel in communication with the source selector valve 223.

For connection to an off-board container 225, such as a pail, drum, tote tank, or the like, the source selector valve 223 may include an off-board hose or other conduit 227 that is coupled at one end to the source selector valve 223. An opposing end of the off-board hose 227 may include a suction wand 229 configured to be submerged within the foamant 222c to facilitate removal thereof from the off-board container 225 as the foam pump 224 pulls a vacuum. When the off-board container 225 is empty, the foam pump 224 will lose prime as air fills the off-board hose 227 and subsequent intake plumbing leading to the foam pump 224. A bypass valve 231 is therefore preferably provided at the foam pump 224 (or at least between the foam pump 224 and the injection point into the discharge conduit 218) to allow the air to escape via a bypass hose 233, rather than being pushed into the water stream.

It is preferred that the fire suppression system 210 be configured to open the bypass valve 231 upon detection of one or more conditions indicating an empty off-board container 225 or loss of prime, and then close the bypass valve 231 upon re-establishing prime to resume foam proportioning to the water stream. One or more sensors or the like may therefore be provided to measure conditions indicative of loss of prime. For example, a chemical flowmeter 217 (Fig. 5) may be placed in fluid communication with the foam injection conduit 213 to detect the foam flow rate in the foam injection conduit 213. A detected flow rate below a predetermined threshold, based on current operating conditions or the like, may indicate a loss of prime and trigger opening of the bypass valve 231. In another example, a pressure sensor 219 (Fig. 1) may be placed in fluid communication with the foam injection conduit 213 to detect discharge pressure from the foam pump 224, with a detected drop below the water pressure in the discharge conduit 218 signaling a loss of prime. In yet another example, the suction wand 229 may be provided with a tip sensor 235 (Fig. 10) capable of discriminating between air and liquid. For example, the tip sensor 235 may be an optical, inductive, or capacitive-type sensor configured to measure a fill level of the off-board container 225. An example of such a sensor is the CAP-300 Capacitive Level Sensor available from Gems Sensors, Inc. Other types of sensors (e.g., float sensors or the like - not shown) could be used as well, including those not directly coupled to other components of the system 210, but which could be in wireless communication therewith to communicate condition information. While the examples given above rely on a single sensor to detect conditions indicative of prime loss, the flowmeter 217, pressure sensor 219, the tip sensor 235, and/or others may be used together in combination to prevent false indications.

The one or more sensors (e.g., flowmeter 217, pressure sensor 219, tip sensor 235, and/or the like) are preferably in wired or wireless communication with a processor 237, or another similar type of controller, application specific integrated circuit (ASIC) or the like, which preferably receives and acts upon the data received from the sensors. For example, based on received flow data from the flowmeter 217, the processor 237 can deduce the loss of prime by the foam pump 224 and perform the necessary responsive operations. The processor 237 is preferably housed with the operator interface 228, although the processor 237 may alternatively be located within the motor controller 226 or separately housed elsewhere in the system 210. While shown as a single processor 237, the functionality may also be divided among multiple devices. In other embodiments, the processor 230 of the motor controller 226 may receive the sensor data and perform the functions described herein.

The processor 237 is also preferably in communication (wired or wireless) with the source selector valve 223. Upon determining that the source selector valve 223 is drawing from the off-board container 225 and that the foam pump 224 performance is deteriorating based on data from the one or more sensors, the processor 237 preferably issues an alert to the user that the currently selected off-board container 225 is empty. The alert may be visual or audible, and may be made through the operator interface 228, although the alert may additionally or alternatively be sent through other system components or external devices.

The processor 237 is preferably also in communication with the foam pump 224 (e.g., directly or via the motor controller 226 - although this requirement is moot where the processor 237 is the processor 230 of the motor controller 226) and the bypass valve 231. In response to detection of the conditions mentioned above (i.e., drawing from off-board container 225 and sensor data indicating depleted foam pump 224 performance), the processor 237 preferably causes the bypass valve 231 to open to vent air being drawn into the foam pump 224 via the off-board hose 227 in an empty off-board container 225. The processor 237 may also cause the motor 212 to change its operating status to account for the fact that foamant 222c is no longer being drawn. As but one example, operating speed of the foam pump 224 may be reduced.

Once the user exchanges the depleted off-board container 225 for another and the off-board hose 227 (e.g., via the suction wand 229) is submerged, the foam pump 224 may begin to regain its prime, which preferably the processor 237 is able to detect. In one example, the pressure sensor 219 detects a rise in pressure in the injection conduit 213. The foam pump 224 may generate more pressure when primed, even when the bypass valve 231 is open, preferably because the bypass valve 231 will be small in size compared to the foam pump 224 and the surrounding plumbing. Accordingly, upon reaching a predetermined pressure level, the processor 237 may cause the bypass valve 231 to close so the foam pump 224 can resume normal operation. Once the bypass valve 231 is closed, preferably the pressure level detected by the pressure sensor 219 will be greater than or equal to the pressure in the discharge conduit 218. If not, the processor 237 may determine that the foam pump 224 has not fully primed and may re-open the bypass valve 231 briefly to allow more air to escape the system. In some embodiments, the processor 237 may attempt this brief re-opening of the bypass valve 231 a predetermined number of times (e.g., three), wherein if the pressure detected by the pressure sensor 219 is still insufficient, a warning may be issued to the user to check connections. Pressure of the water in the discharge conduit 218 can be obtained, for example, from a pump pressure controller such as the Class1 Sentry Series or the TPG (Total Pressure Governor), which are conventionally known.

In another example, the bypass valve 231 may be located downstream of the flowmeter 217. When the flowmeter 217 detects increased outgoing flow from the foam pump 224, the processor 237 may determine that prime is restored and the bypass valve 231 may be closed. In yet other examples, other methods of detecting that prime has been restored to the foam pump 224 may be used to allow the processor 237 to close the bypass valve 231, including combinations of the foregoing to prevent false indications of restored prime condition. The processor 237 may also, in conjunction with closing the bypass valve 231, adjust any necessary motor 212 parameters, such as by increasing foam pump 224 speed or the like. In still other embodiments, the user may manually close the bypass valve 231 in response to the processor 237 outputting an alert that prime of the foam pump 224 has been restored.

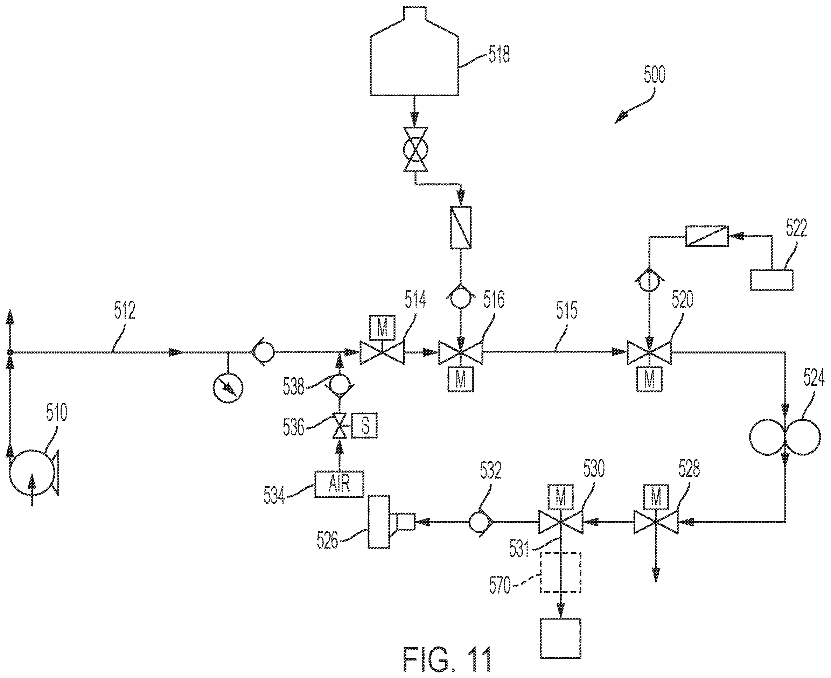

Referring now to Figs. 11-12, example embodiments are provided of chemical additive systems utilizing an air purge following a flushing operation to push residual water out of the tubing to avoid freezing and other drainage issues. A first example additive system 500 is shown in Fig. 11 having a water pump 510 responsible for moving water from a water source (not shown), such as a water tank or the like. The water pump 510 is in fluid communication with a system intake pipe 512 gated by a water valve 514 to a main tube 515, which may be a two-way ball valve, although other types of valves may be used as well. Downstream of the water valve 514 is a source valve 516 coupling an additive source 518, such as an on-board additive tank or the like, to the main tube 515, allowing a chemical additive (not shown) in the additive source 518 to be selectively added to the flow. The source valve 516 may be a three-way ball valve although other types of valves may be used as well. Optionally, an off-board source valve 520 may be placed downstream of the water valve 514, which couples an off-board additive source 522 to the main tube 515. The off-board source valve 520 may be a three-way ball valve, although other types of valves may be used as well. The main tube 515 runs to a foam pump 524 similar to the foam pumps described above, which provides flow of water and/or additives toward a discharge port, such as a water manifold 526 that leads to a discharge conduit (not shown). Between the foam pump 524 and the water manifold 526, there may be a refill valve 528 that can be used to divert additives back to one of the sources (e.g., additive source 518 or off-board additive source 522) and/or a bypass valve 530 that can be used for priming the foam pump 524 (as described above) or other bypass operations (e.g., calibration or the like) via a bypass line 531. Each of the refill and bypass valves 528, 530 may be three-way ball valves, but other types of valves may be used as well. A check valve 532 is preferably also located upstream of the water manifold 526 to prevent discharge water from backfilling into the system 500.

An air source 534 may be provided to supply air to travel through the main tube 515 for removing excess water from the system 500 following a flushing operation. The air source 534 may be supplied by the vehicle (e.g., firetruck) (not shown) or from some other source of compressed air, such as an independent air compressor or air tank. The air source 534 is preferably coupled to the system intake pipe 512 upstream of the water valve 514, although other connection locations may be used as well depending on the configuration of the system 500. The connection of the air source 534 is preferably gated by an air valve 536, which may be a solenoid valve or the like. In addition, a check valve 538 is preferably also provided to avoid having water travel from the system intake pipe 512 to the air source 534. Preferably the air supplied to the system 500 has a maximum of 150 psi, but other pressures can be used as well depending on the characteristics and needs of the specific system.

During a flushing operation, the air valve 536 may be closed while the water valve 514 is open. The source valve 516 and off-board source valve 520 are preferably in a configuration that closes off the respective additive sources 518, 522 but allows flow through the main tube 515. The refill valve 528 is preferably in a configuration to allow flow through toward the water manifold 526 but prevents any refill flow. The bypass valve 530 is preferably open in both directions to allow flow through to the water manifold 526 and out of the system 500 via the bypass line 531. This valve configuration allows the water pump 510 to flush the main tube 515, the foam pump 524 the bypass line 531, and the water manifold 526 and any downstream discharge. For a subsequent air purge and drainage operation, with the water pump 510 off, the air valve 536 is opened, while the water valve 514, source valve 516, off-board source valve 520, refill valve 528, and bypass valve 530 all remain in the same configuration, allowing the air to travel the same route as the flushing water, thereby expelling and drying the system 500. Any or all of the valves 514, 516, 520, 528, 530, 536 described above may be controlled by a controller (not shown) affiliated with the foam pump 524, or other system controllers as described above.

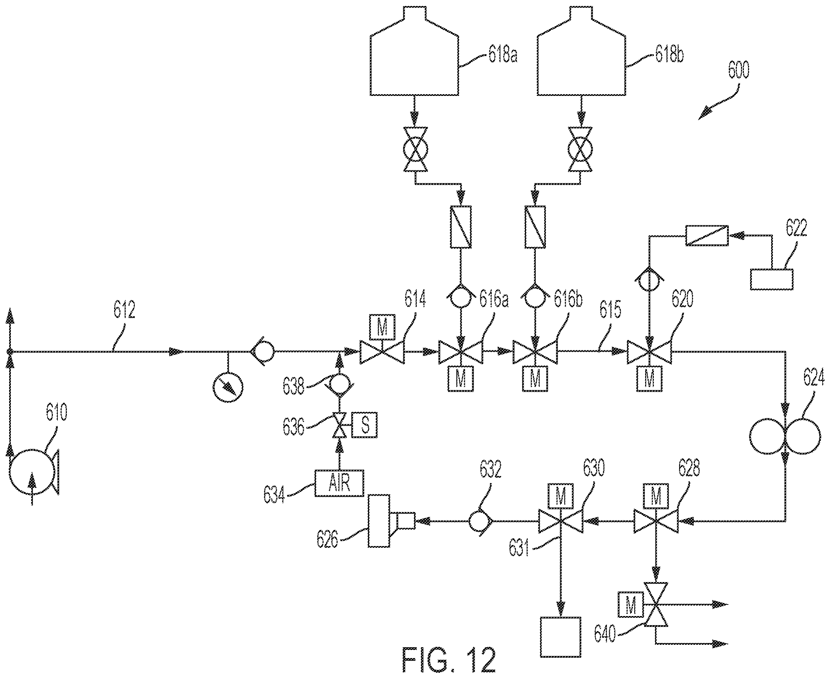

A second example embodiment of an additive system 600 is shown in Fig. 12 that is similar to the first example embodiment in Fig. 11. Like numerals have been used for like elements, except the 600 series numerals have been used for the second example embodiment. Accordingly, a complete description of the second example embodiment has been omitted, with only pertinent differences being described herein.

The additive system 600 according to the second embodiment includes two separate additive sources 618a, 618b, which preferably can respectively supply different additives to the flow. As a result, two separate source valves 616a, 616b are provided in fluid communication with the main tube 615 to allow for independent access to each of the additive sources 618a, 618b. However, other arrangements are possible, including having the lines from the additive sources 618a, 618b branch together before joining the main tube 615, such that only a single source valve is needed in the main tube 615. Moreover, any number of additive sources may be utilized. The system 600 may further include a refill branch valve 640 that can be arranged to allow the different additives to be redirected back to appropriate sources 618a, 618b or similar destinations.

During a flushing operation, the air valve 636 may be closed while the water valve 614 is open. The source valves 616a, 616b and off-board source valve 620 are preferably in a configuration that closes off the respective additive sources 618a, 618b, 622 but allows flow through the main tube 615. The refill valve 628 is preferably in a configuration to allow flow through toward the water manifold 626 but prevents any refill flow (the configuration of the refill branch valve 640 is irrelevant to the operation. The bypass valve 630 is preferably open in both directions to allow flow through to the water manifold 626 and out of the system 600 via the bypass line 631. This valve configuration allows the water pump 610 to flush the main tube 615, the foam pump 624 the bypass line 631, and the water manifold 626 and any downstream discharge. For a subsequent air purge and drainage operation, with the water pump 610 off, the air valve 636 is opened, while the water valve 614, source valves 616a, 616b, off-board source valve 620, refill valve 628, and bypass valve 630 all remain in the same configuration, allowing the air to travel the same route as the flushing water, thereby expelling and drying the system 600.

The additive systems 500, 600 shown in Figs. 11 and 12 are exemplary only. Use and arrangement of particular valves, additive sources, tubes and pipes, and the like may be varied depending on the design needs of a particular system and environment. The orientation of particular valves during an air purge operation is therefore subject to the design of the system.

Referring back to Fig. 11, the first example additive system 500 may be used as an example for performing a decontamination operation that does not rely on external fresh water. For example, the system 500 may perform a flushing operation as described above (with or without the air purge). The system controller or other controller within the system 500 (similar to those described above) may switch the system 500 over to a decontamination mode. The off-board additive source 522 may contain a decontamination solution, such as aqueous-based solutions containing one or more of hydrogen peroxide, sodium hypochlorite, hypochlorous acid, citric acid, or the like in appropriate amounts. The decontamination solution may be premixed or can be mixed in the off-board container 522. The water valve 514 may be closed, and the source valve 516 may be configured to prevent entry of additives from the additive source 518 (when such an additive source 518 is present in the system 500). The foam pump 524 therefore draws the decontamination solution into the main tube 515 through the off-board valve 520 from the off-board container 522.

In the system 500 shown in Fig. 11, preferably the bypass line 531 is used to perform the decontamination operation. As such, the bypass valve 530 may be configured to divert all flow coming from the foam pump 524 to the bypass line 531 and prevent flow into the water manifold 526. Optionally, for cold weather scenarios, the bypass line 31 may run through an onboard heat exchanger 570 or similar type of heating device to provide comfort and avoid complications of freezing during decontamination. The use of the foam pump 524 to draw and disperse a decontamination solution offers a more hygienic and safer method than current decontamination procedures as such foam pumps 524 are typically made from bronze and stainless steel components, and are already prepared to create pressure for moving chemicals. This process also saves the cost and space of having an external or separate decontamination sprayer integrated into the fire truck.

Although the bypass line 531 is shown and described in Fig. 11 as the discharge point for the decontamination procedure, other discharge points may be used as well, including a dedicated decontamination line (not shown), or the like. It may also be possible to utilize an onboard decontamination source (not shown) which the foam pump 524 may draw from similar to the additive source 518.

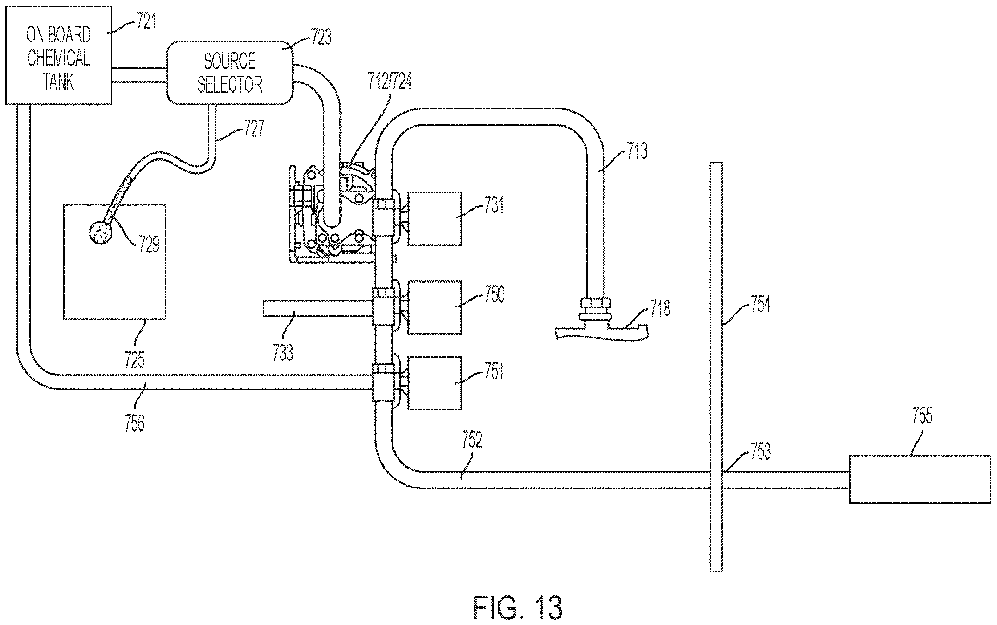

Fig. 13 depicts an alternative example of a fire suppression system being configured for a decontamination operation (as well as other operations described above, such as refill, priming, calibration, and the like). Fig. 13 shows a portion of a fire suppression system similar in components and arrangement to that of Fig. 10, with some differences described further below.

In Fig. 13, the bypass valve 731 is used to divert flow from the source selector 723 via the foam pump 724 to the foam injection conduit 713 (where the flow gets injected into the discharge conduit 718) and/or toward a priming valve 750. The priming valve 750 may divert flow from the bypass valve 731 either to atmosphere via the bypass hose 733 for priming and/or calibration or toward a refill/decon valve 751. The refill/decon valve 751 may redirect flow from the priming valve 750 either back to the on-board additive tank 721 via a refill hose 756 or to a decontamination hose 752. In the embodiment shown in Fig. 13, the decontamination hose 52 leads to a panel 754, typically located on the firefighting vehicle (not shown), having a bulkhead connection 753 for attachment by a spray wand or nozzle 755 for use in decontamination or other cleaning procedures. In some other embodiments, the spray wand or nozzle 755 may be directly coupled to a port of the refill/decon valve 751, including embodiments where the refill/decon valve 751 is mounted on or within the panel 754. Additional refill valves (not shown) may be utilized when multiple additive tanks 721 are present.

As discussed throughout, the valves 731, 750, 751 may be operatively connected to one or more controllers (not shown in Fig. 13) for managing actuation thereof. Actuation may be made in response to selections of operations made by a user at a user interface (not shown in Fig. 13). For example, a user may select a "decontamination" operation at the interface and the appropriate controller(s) will, in response, actuate the valves 731, 750, 751 appropriately, as well as perform any other necessary functions to enable the decontamination operation. In one embodiment, selection of a decontamination operation will result in having the foam pump 724 (with motor 712) perform a flushing operation (similar to that described above). Afterward, the source selector 723 will switch over to the off-board container 725 holding the decontamination solution, which will be drawn by the foam pump 724 via, e.g., suction wand 729 and conduit 727. The decontamination solution will travel from the pump through bypass valve 731, priming valve 750, and refill/decon valve 751 to decontamination hose 752. The user may utilize the spray wand or nozzle 755 to spray the decontamination solution onto the personnel requiring decontamination.

Those skilled in the art will recognize that boundaries between the above-described operations are merely illustrative. The multiple operations may be combined into a single operation, a single operation may be distributed in additional operations and operations may be executed at least partially overlapping in time. Further, alternative embodiments may include multiple instances of a particular operation, and the order of operations may be altered in various other embodiments.

While specific and distinct embodiments have been shown in the drawings, various individual elements or combinations of elements from the different embodiments may be combined with one another while in keeping with the spirit and scope of the invention. Thus, an individual feature described herein only with respect to one embodiment should not be construed as being incompatible with other embodiments described herein or otherwise encompassed by the invention.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the spirit and scope of the present invention as defined by the appended claims.

## Claims

1. A system comprising:
a brushless direct current electric (BLDC) motor having a plurality of phases; and
a motor controller operatively connected to the plurality of phases of the BLDC motor and configured to selectively power rotation of the BLDC motor via the plurality of phases in a first mode and a second mode,
wherein when the motor controller powers rotation of the BLDC motor in the first mode, the motor controller is configured to
(a) determine a current rotational position of the BLDC motor,
(b) determine a subsequent rotational position of the BLDC motor to which the BLDC motor is to be rotated,
(c) apply a first pulse width modulation (PWM) setting to one or more of the plurality of phases to cause the BLDC motor to rotate toward the subsequent rotational position,
(d) responsive to detecting that the BLDC motor has reached the subsequent rotational position, apply a second PWM setting different from the first PWM setting to the one or more of the plurality of phases until expiration of a timer of predetermined duration, and
(e) after expiration of the timer, return to step (a), and
wherein when the motor controller powers rotation of the BLDC motor in the second mode, the motor controller is configured to:
(i) determine a current rotational position of the BLDC motor,
(ii) determine a subsequent rotational position of the BLDC motor to which the BLDC motor is to be rotated,
(iii) apply a third PWM setting to one or more of the plurality of phases to cause the BLDC motor to rotate toward the subsequent rotational position, and
(iv) responsive to detecting that the BLDC motor has reached the subsequent rotational position, return to step (i).

2. The system of claim 1, further comprising:
a foam pump having an input configured for fluid communication with at least one additive source and an output configured for fluid communication with a discharge conduit, the foam pump being driven by the BLDC motor to inject one or more chemical additives from the at least one additive source into the discharge conduit.

3. The system of claim 2, wherein the BLDC motor and the foam pump are provided in a common housing.

4. The system of any one of claims 2-3, further comprising a source selector valve disposed upstream of the foam pump input and configured to enable selection of one of a plurality of additive sources for fluid communication with the foam pump input.

5. The system of any one of claims 1-4, further comprising a plurality of position sensors operatively connected to the motor controller and configured to detect the current rotational position of the BLDC motor.

6. The system of any one of claims 1-5, wherein the third PWM setting is different from the first and second PWM settings.
